# FASCICULE DE BREVET EUROPEEN

(11) **EP 0 594 477 B1**
(45) Date de publication et mention de la délivrance du brevet: **18.09.1996**
(21) Numéro de dépôt: 93402468.8
(22) Date de dépôt: 07.10.1993
(51) Int. Cl.: G01V 1/22

(54) **Méthode et système de transmission sismique utilisant des unités de concentration**
Seismisches Transmissionsverfahren und Anordnung mit Konzentrationseinheiten
Seismic transmission method and system using concentration units

(30) Priorité: 12.10.1992 FR 9212328
(43) Date de publication de la demande: 27.04.1994
(73) Titulaire: INSTITUT FRANCAIS DU PETROLE, F-92502 Rueil-Malmaison (FR)
(72) Inventeur: Rialan, Joseph, F-92190 Meudon (FR); Grouffal, Christian, F-92500 Rueil Malmaison (FR)

(56) Documents cités:
- EP-A- 0 115 717
- EP-A- 0 250 280
- EP-A- 0 260 165
- EP-A- 0 329 546
- EP-A- 0 501 857
- GB-A- 2 105 079

## Description

L'invention a pour objet une méthode et un système de transmission de signaux entre des groupes d'appareils d'acquisition de données et une station centrale par l'intermédiaire d'unités de concentration.

La méthode et le système selon l'invention trouvent leur application notamment dans le domaine de la prospection sismique où l'on doit transférer à une station centrale telle qu'un camion laboratoire, une masse souvent très important de signaux. Ces signaux sont captés par un ensemble souvent considérable de récepteurs tels que des géophones, disposés au contact du sol au-dessus d'une formation géologique à étudier, en réponse à des ébranlements émis par une source sismique et renvoyés par les discontinuités du sous-sol.

Les méthodes actuelles de prospection sismique comportent l'utilisation d'appareils d'acquisition répartis parfois sur une distance de plusieurs kilomètres et destinés chacun à collecter les signaux reçus par un ou plusieurs récepteurs, à les numériser et les stocker dans une mémoire locale avant leur transmission en temps réel ou différé à une station centrale par une voie de transmission telles qu'un câble, une fibre optique, un canal hertzien etc.

Différents systèmes de transmission de données sismiques sont utilisés pour relier des appareils d'acquisition à une station centrale. Les liaisons peuvent être assurées au moyen de câbles, de canaux hertziens, via un ou plusieurs relais éventuels, ou encore combiner les liaisons par câbles et par voie hertzienne comme indiqué par exemple dans les brevets FR 2.599.533, 2.538.561, 2.511.772 ou 2.627.652.

Dans le brevet FR 2 511 772, est décrit un système de transmission où une station centrale communique directement avec un premier ensemble d'appareils d'acquisition au moyen d'un premier canal hertzien et, au moyen d'un deuxième canal hertzien avec un radio-relais, lequel communique avec un deuxième ensemble d'appareils d'acquisition au moyen d'un troisième canal hertzien, cet agencement mixte permettant de s'adapter facilement à des modifications de la topographie ou aux difficultés de liaison par radio dans les zones où des campagnes d'exploration sismique sont menées.

Dans le brevet FR 2.627 652, est décrit un système de transmission semi-séquentiel permettant à des groupes d'appareils d'acquisition sismique, de communiquer simultanément avec une station centrale, au moyen de plusieurs voies de transmission hertzienne de fréquences différentes. Dans chaque groupe, les appareils reçoivent respectivement des numéros d'ordre différents en fonction de leur place sur le terrain. Chacun d'eux détermine l'écart entre son propre numéro d'ordre et un numéro d'ordre reçu par radio et qui est celui affecté au premier appareil de son groupe et quand son tour est venu, il s'attribue la fréquence affectée au groupe auquel il appartient et il transmet les données qu'il a enregistré.

De cette façon, avec un ordre unique, on peut commander le rapatriement semi-séquenciel vers la station centrale de données émanant de groupes déterminés d'appareils d'acquisition.

Les données numérisées acquises par les boitiers d'acquisition sur le terrain sont généralement transmises par séries de 32 ou 64 mots numériques par exemple inclus dans une trame de transmission et le boitier transmetteur attend un signal d'acquittement de la part de la station centrale avant émission de toute nouvelle série de mots. Ce mode de transmission est relativement lent.

La méthode de transmission selon l'invention permet la transmission à une station centrale de commande et d'enregistrement, par l'intermédiaire d'un nombre n déterminé d'unités de concentration, de données numérisées et mémorisées dans une pluralité d'appareils d'acquisition de données sismiques répartis dans une zone d'acquisition, ces données correspondant à des signaux reçus par des capteurs provenant de discontinuités d'une formation géologique en réponse à des ébranlements transmis dans le sous-sol par une source sismique. La méthode est caractérisée en ce qu'elle comporte :
- la répartition d'au moins une partie des appareils d'acquisition en un nombre de groupes (G1, G2, ..., Gn) au moins égal au nombre n d'unités de concentration, chacun d'eux comportant au plus un certain nombre p d'appareils d'acquisition;
- l'affectation à chaque groupe (Gi) d'un nombre fixé j de fréquences particulières de transmission hertzienne (fil, ..., fij), ce nombre j étant inférieur au nombre p d'appareils de chaque groupe et défini pour chaque groupe, les appareils d'acquisition d'un même groupe (Gi) et l'unité de concentration (Ci) associée étant pourvus chacun de moyens de transmission hertzienne sur au moins une desdites j fréquences particulières;
- la subdivision de chaque groupe Gi en au plus j sous-groupes d'appareils d'acquisition devant utiliser une même fréquence de transmission et ceci pour tous les groupes d'appareils d'acquisition, et l'assignation de numéros d'ordre différents aux différents appareils d'acquisition d'un même sous-groupe;
- l'envoi depuis la station centrale, d'un ordre de transmission unique à toutes les unités de concentration et tous les appareils d'acquisition; et
- la transmission de signaux successivement par tous les appareils d'acquisition d'un même sous-groupe durant des fenêtres d'émission décalées dans le temps les unes par rapport aux autres, chaque appareil d'acquisition étant adapté à retarder sa fenêtre d'émission d'un intervalle de temps dépendant de son numéro d'ordre dans le sous-groupe auquel il appartient, et les transmissions de tous les sous-groupes de n'importe lequel des différents groupes étant effectuées sensiblement en même temps.

Si l'on dispose d'appareils d'acquisition pourvus chacun de moyens de transmission sur plusieurs fréquences différentes, la méthode peut comporter l'envoi d'une commande préalable à tous les appareils d'un même groupe, de signaux de commande permettant la commutation de leur fréquence d'émission sur une fréquence déterminée de façon à les affecter à un sous-groupe déterminé.

La méthode peut comporter en outre l'envoi d'une commande préalable permettant l'assignation de numéros d'ordre différents à tous les appareils d'acquisition de chacun des sous-groupes.

Suivant un mode de réalisation, une partie au moins des unités de concentration est pourvue de moyens de communication par voie hertzienne avec la station centrale, à une fréquence distincte pour chacune desdites unités, les signaux reçus en même temps depuis les appareils d'acquisition des différents sous-groupes vers la station centrale, étant transmis successivement en utilisant cette fréquence distincte.

Suivant un autre mode de réalisation, une partie au moins des unités de concentration peut être reliée à la station centrale par au moins une voie matérielle de transmission.

Le système de transmission qui met en oeuvre la méthode selon l'invention, comporte un nombre n déterminé d'unités de concentration (C1, C2, ..., Cn) pourvues chacune de moyens de communication avec ladite station centrale de commande et d'enregistrement et d'un ensemble d'émission et de réception par radio pour communiquer simultanément et suivant plusieurs fréquences différentes chacune avec un groupe d'appareils d'acquisition;
- chaque appareil d'acquisition d'un même groupe comporte des moyens de mémorisation pour un numéro d'ordre, des moyens d'émission et de réception adaptés à fonctionner suivant au moins une fréquence de transmission déterminée, des moyens de décodage d'ordres émis par la station de commande et d'enregistrement, des moyens pour engendrer une échelle de temps sensiblement la même pour tous les appareils d'acquisition de l'ensemble, et un ensemble de traitement permettant la délimitation d'une fenêtre d'émission et son décalage dans le temps d'un intervalle dépendant du numéro d'ordre affecté audit appareil, pour la lecture de données acquises dans lesdits moyens de mémorisation et leur transmission à ladite fréquence déterminée.

Avec cet agencement, on peut commander par un ordre unique le rapatriement dans la station centrale de toutes les données mémorisées dans l'ensemble des appareils d'acquisition répartis sur le terrain au moyen d'un nombre limité de fréquences de transmission. La station centrale reçoit simultanément p trains de signaux (issus des unités de concentration) chacune d'eux étant constitué par la mise en séquence de signaux reçus simultanément de j appareils d'acquisition d'un même nombre j de sous-groupes différents, d'un même groupe les appareils d'un même sous-groupe respectant de façon autonome et automatique un certain ordre de priorité.

D'autres caractéristiques et avantages de la méthode et du système de transmission selon l'invention apparaîtront mieux à la lecture de la description ci-après de modes de réalisation décrits à titre d'exemples non limitatifs, en se référant aux dessins annexés où :
- la Fig.1 montre un premier mode de réalisation de l'invention où tous les échanges entre les appareils d'acquisition, les unités de concentration et la station centrale sont effectuées par voie hertzienne;
- la Fig.2 montre un exemple de réalisation d'un appareil d'acquisition;
- la Fig.3 montre un exemple de réalisation d'une unité de concentration;
- la Fig.4 montre un autre mode de réalisation utilisant des modes de transmission mixtes par voie hertzienne et voie matérielle de transmission; et
- la Fig.5 montre un exemple de positionnement de fenêtres d'émission de différents appareils d'acquisition dans un même groupe.

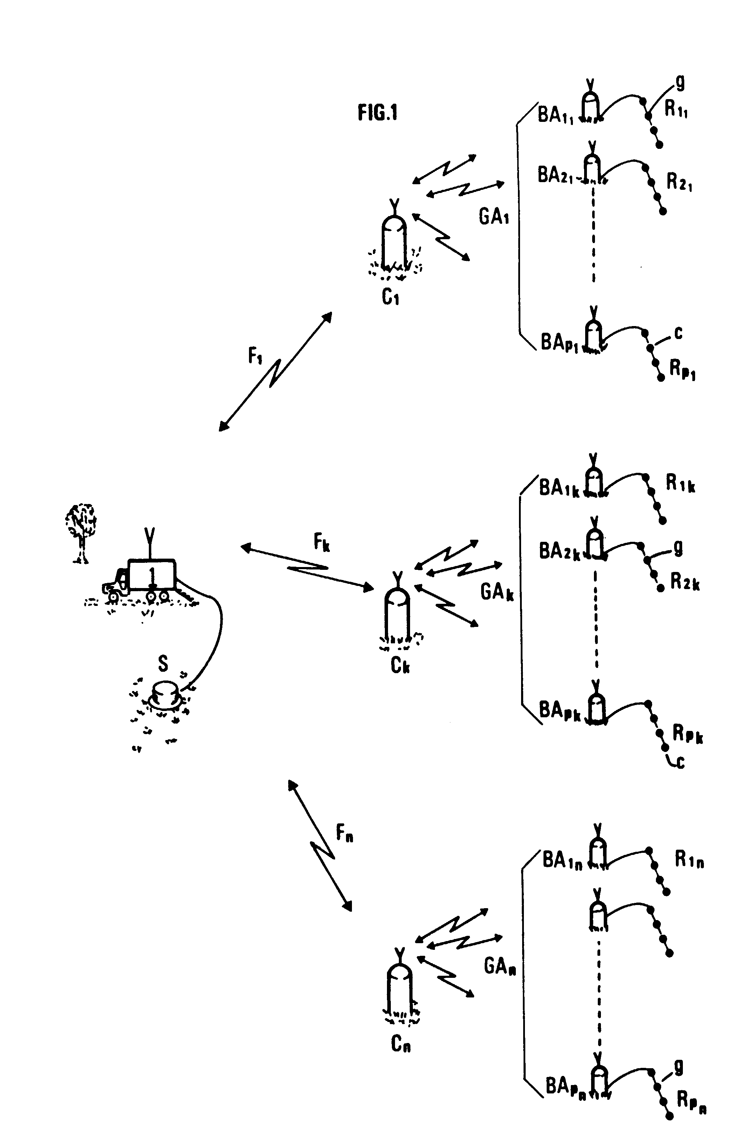

Le dispositif sismique schématisé à la Fig.1 comporte un ensemble souvent considérable de récepteurs simiques R11 à Rpn répartis à intervalles les uns des autres sur une zone à explorer pour capter les ondes sismiques renvoyées par des discontinuités souterraines, en réponse à la transmission dans le sol d'ondes sismiques produites par une source S, et une station centrale de commande et d'enregistrement 1. Chacun de ces récepteurs R est constitué le plus souvent par interconnexion électrique de plusieurs capteurs élémentaires alignés g. Tous les récepteurs R11 à Rpn sont connectés à des appareils d'acquisition de données BA11 à BApn adaptés à numériser et mémoriser temporairement les données sismiques recueillies par le récepteur R associé.

L'ensemble des récepteurs R11 à Rpn est subdivisé en n groupes GA1, GA2, ..., GAn comportant chacun un certain nombre p de récepteurs et d'appareils d'acquisition associés. Un groupe quelconque d'ordre k par exemple comporte p récepteurs R1k, R2k, ... Rpk connectés respectivement à p appareils d'acquisition BA1k, BA2k, BApk par exemple. A chaque groupe de récepteurs et d'appareils d'acquisition, on associe une unité de concentration C1 ... Ck ... Cn. Ces unités sont agencées pour relayer respectivement les communications entre la station centrale 1 et les appareils du groupe d'appareils associé GA1... GAk... GAn. On affecte à chaque groupe Gi un certain nombre q de fréquences de transmission fi1, fi2 ..., fiq inférieur généralement au nombre p d'appareils d'acquisition des groupes. De préférence, ces fréquences sont particulières à chaque groupe. On répartit les appareils de chaque groupe Gi en q sous-groupes contenant chacun plusieurs appareils d'acquisition et l'on affecte à chacun des sous-groupes une fréquence parmi les q fréquences particulières disponibles fi1 à fiq.

La méthode de transmission qui est mise en oeuvre consiste essentiellement à assigner un sous-groupe à chaque appareil d'acquisition et à celui-ci, un certain rang qui fixe les règles d'utilisation de ia fréquence de transmission f affectée à son sous-groupe.

Si par exemple un groupe quelconque GAk dispose de 4 fréquences f1k, f2k, f3k, f4k, on numérote de 1 à p les appareils du groupe. On affecte la première fréquence f1k aux appareils numérotés BA1k, BA5k, BA9k BA13k etc, la fréquence f2k aux appareils numérotés BA2k, BA6k etc, la fréquence f3k, aux appareils numérotés BA3k, BA7k etc et la fréquence f4k aux appareils BA4k, BA8k etc, avec des décalages successifs de 4 rangs dans chaque sous-groupe. On affecte en outre à chaque appareil un temps d'émission d'une durée déterminée. Cette durée est calculée à partir du nombre d'échantillons à transmettre et du rythme choisi pour la transmission, et elle est comprise par exemple entre 0,12 s et 4 s environ.

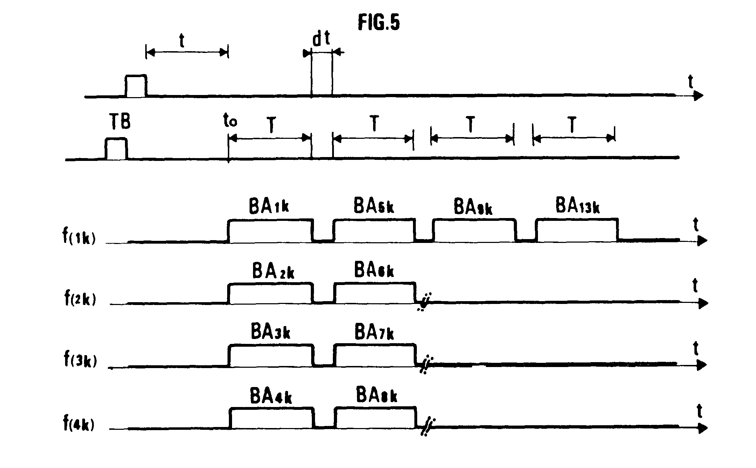

Dans ces conditions, quand après des cycles d'émission-réception sismiques les appareils du groupe Gk recoivent depuis la station centrale un ordre TB d'émission des données sismiques qui ont été mémorisées et sont effectivement prêts à émettre à partir d'un instant initial t0, (Fig.5), les premiers appareils d'acquisition à transmettre durant l'intervalle T fixé sont les appareils BA1k, BA2k, BA3k et BA4k en tête de leurs sous-groupes respectifs. Par comparaison de leur numéro d'ordre avec ceux des appareils de tête, les quatre suivants BA5k à BA8k calculent qu'ils doivent décaler leur fenêtres d'émission respectives d'un intervalle T augmenté d'un intervalle de garde dt suffisant pour tenir compte de disparités éventuelles dans les signaux de base de temps des différents appareils. Les quatre suivants, par une opération de comparaison analogue, décalent leurs fenêtres respectives d'un intervalle égal à 2.(T+dt) etc.

On dispose les unités de concentration à des distances relativement faibles pour lesquelles la puissance requise des émetteurs de radio est faible, de l'ordre de 100 mW par exemple ou même moins. Les réglementations en matière de télécommunications n'étant pas contraignantes pour ces faibles puissances, on peut disposer sans difficulté d'un nombre important de canaux de communication parallèles entre les différents sous-groupes et l'unité de concentration associée. On peut de ce fait restreindre beaucoup le nombre de canaux hertziens à puissance plus élevée qui doivent faire l'objet d'une autorisation.

Les communications entre les appareils d'acquisition sur le terrain et le poste central peuvent être accélérées si l'on transmet les données sans messages d'acquittement interposés. Dans ce cas, on choisit de préférence une méthode connue de transmission avec entrelacement et détection d'erreurs pour minimiser l'influence des perturbations éventuelles telle que celle décrite dans la demande de brevet FR 91/02243.

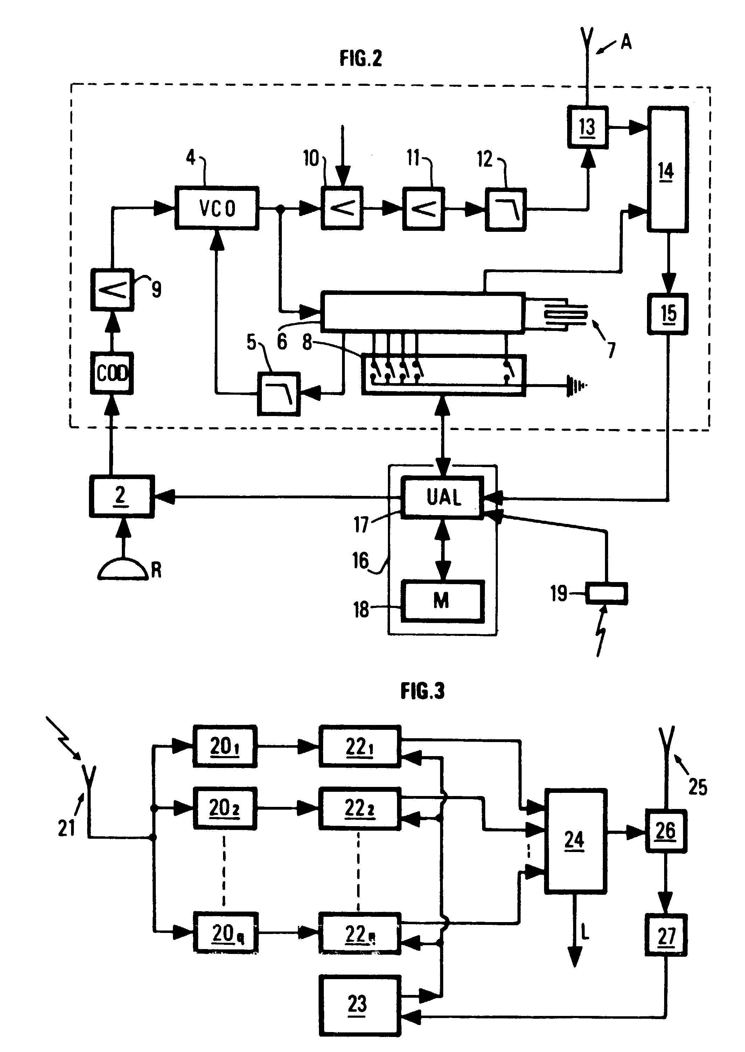

Chacun des appareils d'acquisition comporte par exemple (Fig.2) une unité d'acquisition 2 pour amplifier les signaux du récepteur sismique R associé, pour les numériser et les mémoriser. Dans le cas où plusieurs récepteurs sont reliés au même appareil, celui-ci comporte en outre un multiplexeur en tête (non représenté) comme il est bien connu. L'unité d'acquisition 2 est connectée à un ensemble d'émission-réception 3 agencé pour émettre et recevoir des signaux à une fréquence sélectionnée dépendant du groupe et du sous-groupe auquel l'appareil concerné appartient.

L'ensemble d'émission-réception 3 comporte un oscillateur 4 du type VCO dont la fréquence d'oscillation est déterminée par application d'une tension de commande issue d'un filtre passe-bas 5. L'entrée du filtre 5 est connectée à la sortie d'un circuit synthétiseur de fréquence 6 d'un type connu comportant des boucles d'aaservissement de phase (PLL) et un pré-diviseur permettant d'appliquer à la fréquence de référence définie par un quartz 7, un facteur de réduction programmable. La sélection de ce facteur de réduction est opérée en commandant sélectivement des commutateurs d'un ensemble de commutateurs 8. Le signal appliqué à l'entrée du circuit synthétiseur 6 est le signal de l'oscillateur VCO 4.

Les commutations permettent d'assigner une fréquence particulière parmi les 9 fréquences disponibles pour chaque groupe G, pouvant être effectuées par un opérateur du moment de l'installation des appareils d'acquisition sur le terrain.

Le signal délivré par l'unité d'acquisition 2 est appliqué à un élément de codage COD du type NRZ par exemple, puis amplifiés dans un étage d'amplification 9 et appliqué à l'entrée "modulation"de l'oscillateur 4. La porteuse modulée disponible à la sortie de l'oscillateur 4, est appliquée à une chaîne d'amplification comportant un pré-amplificateur 10, un amplificateur de puissance 11 et un filtre passe-bas 12, le signal amplifié étant appliqué à une antenne d'émission-réception 13 par l'intermédiaire d'un duplexeur d'antenne d'un type connu. Au duplexeur d'antenne 13 est également connecté un récepteur de radio 14 adapté à recevoir les signaux de commande codés issus directement du laboratoire central, portés par un signal à une fréquence bien déterminée commune sur tous les appareils d'acquisition. La démodulation des signaux reçus est effectuée en utilisant un signal produit par le circuit synthétiseur de fréquence 6. Les signaux démodulés issus du récpeteur 14, sont décodés par un décodeur approprié 15 puis appliqués à un ensemble de traitement à micro-processeur 16 comportant une unité arithmétique et logique 17 et une unité de mémoire 18. L'unité 17 comporte un port d'entrée pour la connexion d'un élément d'interface 19 approprié au type de liaison. On peut utiliser par exemple un récepteur optique à infra-rouge tel que celui décrit dans le brevet FR 2 602 875 et qui permet à un opérateur de communiquer des instructions à l'appareil d'acquisition sans avoir à établir avec lui de liaison matérielle. L'élément d'interface 19 peut encore être constitué selon les cas d'un récepteur hertzien ou d'un moyen de connexion pour un câble de transmission. Une connexion 20 est établie entre l'unité arithmétique et logique 17 et l'ensemble de commutateurs 8, de manière que le facteur de réduction appliqué par celui-ci et donc la fréquence d'émission puissent être modifiés à volonté.

Les appareils d'acquisition sont placés par exemple dans des boitiers étanches permettant leur emploi dans des zones humides (lacs, marécages, forêts etc). Un dispositif sismique peut comporter par exemple plusieurs centaines d'appareils d'acquisition.

L'unité de traitement 17 de chaque appareil d'acquisition est programmée pour faire les calculs nécessaires au positionnement de chaque fenêtre d'émission en fonction du numéro d'ordre et de la fréquence assignés ainsi que du rang fixé à l'appareil dans son sous-groupe. Les données nécessaires pour ces calculs de positionnement peuvent être introduits dans chaque appareil au moment de son implantation sur le terrain par exemple, au moyen du boitier 19 (Fig.2) ou bien encore être transmis depuis la station centrale 1 avant le début d'opération prévues d'enregistrement sismique. Cette transmission des données de calcul peut dans ce cas être faite par transmission directe ou via les unités de concentration C1 à Cn.

L'unité de traitement 17 peut être programmé notamment pour réaliser toutes les opérations nécessaires à l'affectation d'une fréquence de transmission et au positionnement relatif des fenêtres d'émission à partir du seul numéro d'ordre de l'appareil d'acquisition sur le terrain, introduit au moment de sa mise en place.

Chacune de ces unités de concentration Ci comporte (Fig.3) des moyens de réception hertzienne comprenant q modules de réception 201, 202, ... 20q connectés en parallèle sur une antenne 21 accordés sur les q fréquences fi1 à fiq attribuées aux groupe Gi associé, pour séparer des signaux reçus simultanément de q appareils d'acquisition parmi les n de ce groupe. Les signaux reçus, après leur séparation, sont placés dans des blocs de mémoire 221, 222, ..., 22q du type FIFO par exemple. Ces blocs sont commandés par un module de synchronisation 23 adapté à gérer l'inscription simultanée des signaux reçus en mémoire et leur relecture séquentielle. Le mode de lecture adopté permet de transformer un ensemble de q signaux différents reçus simultanément de q appareils d'acquisition du groupe Gi et stockés en mémoire en un train de q signaux successifs qui peuvent être retransmis sur une même voie de transmission telle qu'un canal hertzien.

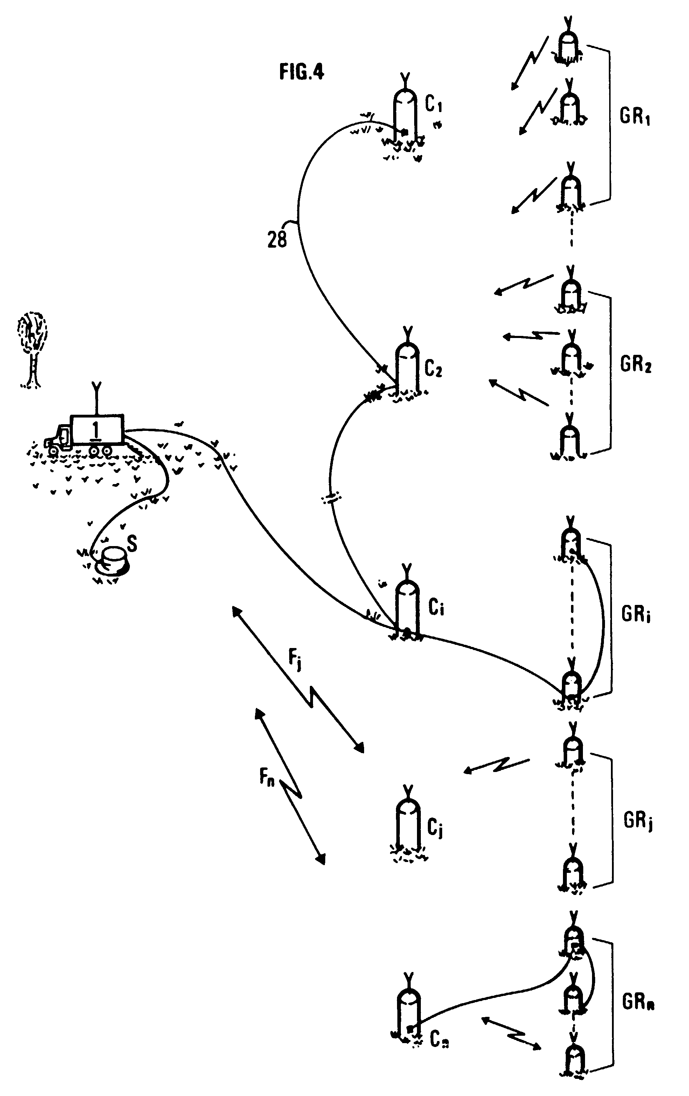

Suivant le mode de réalisation de la Fig.4, on utilise n canaux hertziens de fréquences respectives F1, ..., Fk ..., Fn pour effectuer les transmissions séquentielles depuis les n unités de concentration C1, ... Ck ..., Cn et la station centrale 1. Dans ce cas, les blocs de mémoire 221 à 22q sont connectés à un émetteur de radio 24 réglé sur la fréquence Fk affecté à l'unité de concentration Ck et connecté à l'antenne 25 par l'intermédiaire d'un duplexeur 26. Par l'intermédiaire de ce même duplexeur 26, l'antenne 25 est connectée à un récepteur de radio 27 réglé par exemple sur la fréquence Fk pour détecter des commandes provenant de la station centrale 1.

Suivant le mode de réalisation de la Fig.3, on utilise des unités de concentration Ci pouvant indifféremment émettre et recevoir des signaux par voie hertzienne et par une voie matérielle L telle qu'un câble de transmission ou une fibre optique, suivant un mode de mise en oeuvre analogue à celui décrit dans le brevet FR 2 511 772 précité. Quand l'application envisagée le permet ou l'impose, on choisit de connecter à la station centrale une partie au moins C1, C2 ... Ci des unités de concentration, par l'intermédiaire d'un câble ou d'une fibre commun 28.

On ne sortirait pas du cadre de l'invention en reliant par une liaison matérielle au moins une partie des appareils d'acquisition d'un groupe (tel que le groupe Gn sur la Fig.3) à l'unité de concentration (Cn) associée.

On ne sortirait pas non plus du cadre de l'invention en utilisant dans certains cas, des appareils d'acquisition BA capables d'acquérir par multiplexage les signaux issus de plusieurs récepteurs R.

## Revendications

1. Méthode de transmission à une station centrale de commande et d'enregistrement (1), par l'intermédiaire d'un nombre n déterminé d'unités de concentration (C1, C2, ..., Cn), de données numérisées et mémorisées dans une pluralité d'appareils d'acquisition (BA) de données sismiques répartis dans une zone d'acquisition, ces données correspondant à des signaux reçus par des capteurs et provenant de discontinuités dans une formation géologique en réponse à des ébranlements transmis dans le sous-sol par une source sismique, caractérisée en ce qu'elle comporte :
- la répartition d'au moins une partie des appareils d'acquisition en un nombre de groupes (GA1, GA2, ..., GAn) au moins égal au nombre n d'unités de concentration, chacun d'eux comportant un certain nombre p d'appareils d'acquisition;
- l'affectation à chaque groupe Gi d'un nombre fixé j de fréquences particulières de transmission hertzienne (fi1, ..., fij), ce nombre j étant inférieur au nombre p d'appareils de chaque groupe et défini pour chaque groupe, les appareils d'acquisition d'un même groupe (Gi) et l'unité de concentration (Ci) associée étant pourvus chacun de moyens de transmission hertzienne sur au moins une desdites j fréquences particulières;
- la subdivision de chaque groupe (Gi) en au plus j sous-groupes d'appareils d'acquisition devant utiliser une même fréquence de transmission et ceci pour tous les groupes d'appareils d'acquisition, et l'assignation de numéros d'ordre différents aux différents appareils d'acquisition d'un même sous-groupe;
- l'envoi depuis la station centrale (1), d'un ordre de transmission unique à toutes les unités de concentration et tous les appareils d'acquisition; et
- la transmission de signaux successivement par tous les appareils d'acquisition d'un même sous-groupe durant des fenêtres d'émission décalées dans le temps les unes par rapport aux autres, chaque appareil d'acquisition étant adapté à retarder sa fenêtre d'émission d'un intervalle de temps dépendant de son numéro d'ordre dans le sous-groupe auquel il appartient, et les transmissions de tous les sous-groupes de n'importe lequel des différents groupes étant effectuées sensiblement en même temps.

2. Méthode selon la revendication 1, caractérisée en ce que, chacun des appareils d'acquisition étant pourvu de moyens de transmission sur plusieurs fréquences différentes, elle comporte l'envoi d'une commande préalable à tous les appareils d'un même groupe de signaux de commande permettant la commutation de leur fréquence d'émission sur une fréquence déterminée de façon à les affecter à un sous-groupe déterminé.

3. Méthode selon la revendication 1 ou 2, caractérisée en ce qu'elle comporte en outre l'envoi d'une commande préalable permettant l'assignation de numéros d'ordre différents à tous les appareils d'acquisition de chacun des sous-groupes.

4. Méthode selon l'une des revendications précédentes, caractérisée en ce qu'une partie au moins des unités de concentration est pourvue de moyens de communication par voie hertzienne avec la station centrale (1), à une fréquence (F1-Fn) distincte pour chacune desdites unités, les signaux reçus en même temps depuis les appareils d'acquisition des différents sous-groupes vers la station centrale, étant transmis successivement en utilisant ladite fréquence distincte.

5. Méthode selon l'une des revendications précédentes, caractérisée en ce qu'une partie au moins desdites unités de concentration est reliée à la station centrale par au moins une voie matérielle de transmission (28).

6. Système de transmission pour la mise en oeuvre de la méthode selon l'une des revendications précédentes, permettant la transmission entre une station centrale de commande et d'enregistrement (1) pourvue d'un moyen de commande et de moyens d'enregistrement, et une pluralité d'appareils d'acquisition de données sismiques (BA) répartis dans une zone d'acquisition et comprenant des moyens (13, 14) de transmission par voie hertzienne, des moyens (2) de numérisation et de mémorisation de données correspondant à des signaux reçus par des capteurs et provenant de discontinuités d'une formation géologique en réponse à des ébranlements transmis dans le sous-sol par une source sismique, le système de transmission étant caractérisé en ce que :
- il comporte un nombre n déterminé d'unités de concentration (C1, C2, ..., Cn) pourvu de moyens de communication (F28) avec ladite station centrale de commande et d'enregistrement (1) et d'un ensemble (24-27) d'émission et de réception par radio pour communiquer simultanément et suivant plusieurs fréquences différentes avec chacune avec un groupe d'appareils d'acquisition;
- chaque appareil d'acquisition d'un même groupe comporte des moyens de mémorisation M pour un numéro d'ordre marquant son rang dans un sous-groupe d'appareils, des moyens d'émission et de réception adaptés à fonctionner suivant au moins une fréquence de transmission déterminée, des moyens (15) de décodage d'ordres émis par la station de commande et d'enregistrement, des moyens (6, 7) pour engendrer une échelle de temps sensiblement la même pour tous les appareils d'acquisition de l'ensemble, et un ensemble de traitement (16) permettant la délimitation d'une fenêtre d'émission (T) et son décalage dans le temps d'un intervalle dépendant du numéro d'ordre affecté audit appareil d'acquisition.

7. Système de transmission selon la revendication 6, caractérisé en ce qu'une partie au moins des appareils d'acquisition comportent des moyens de transmission de données sur une voie matérielle de transmission.

8. Système de transmission selon la revendication 6 ou 7, caractérisé en ce qu'une partie au moins des unités de concentration comportent des moyens de transmission de données reçues sur une voie matérielle de transmission.

9. Système de transmission selon l'une des revendication 6 à 8, caractérisé en ce qu'une partie au moins des appareils d'acquisition comportent des moyens d'émission et de réception pouvant être commutés indifféremment sur une quelconque des fréquences de transmission (f1, f2...fq) affectuées à un groupe et des moyens de commutation (8) actionnés par les unités de traitement (16) pour sélectionner la fréquence de transmission.

10. Système de transmission selon la revendication 9, caractérisée en ce que l'ensemble de traitement (16) comporte une unité de calcul (17), une unité de mémorisation (18) et d'un élément d'interface (9) pour l'application par l'opérateur du numéro d'ordre affecté à chaque appareil d'acquisition.

11. Système de transmission selon la revendication 9, caractérisé en ce que les moyens d'émission et de réception radio associés à chaque appareil d'acquisition comportent un oscillateur (4) commandé par une tension électrique et un circuit bouclé comportant un synthétiseur de fréquence à prédiviseur (6) appliquant à une fréquence de référence un facteur de division dépendant desdits moyens de commutation (8), et une unité de réception (14) connectée à l'unité de traitement (16) correspondante (14), et à actionner les moyens de commutation (8).

12. Système de transmission selon la revendication 6, caractérisé en ce que ledit oscillateur (4) comporte une entrée de modulation pour un signal issu d'une chaine comportant un ensemble d'acquisition (2) de signaux sismique, un élément de codage (COD) et des moyens d'amplification (9).

13. Système de transmission selon l'une des revendications principales, caractérisé en ce que chaque unité de concentration (C) comporte des moyens de réception (201-20q) pour séparer des signaux reçus simultanément par plusieurs voies hertziennes des moyens de mémorisation (221-22q) des signaux reçus suivant chacune desdites voies, des moyens (23) pour commander la lecture séquentielle des différents moyens de mémorisation et des moyens de transmission à la station centrale (24-27) des signaux extraits des moyens de mémorisation.

## Patentansprüche

1. Verfahren zur Übertragung von digitalisierten und in einer Vielzahl von Einrichtungen (BA) zur Erfassung von seismischen Daten, die in einer Erfassungszone verteilt sind, gespeicherten Daten an eine zentrale Station (1) zur Steuerung und zur Aufzeichnung unter Zwischenschaltung einer bestimmten Anzahl n von Einheiten (C1, C2, ..., Cn) zur Konzentration, wobei diese Daten Signalen entsprechen, die durch Aufnehmer empfangen sind und von Diskontinuitäten in einer geologischen Formation in Antwort auf Erschütterungen, welche in den Untergrund durch eine seismische Quelle übertragen sind, stammen, dadurch gekennzeichnet, daß es umfaßt:
- die Verteilung von wenigstens einem Teil der Einrichtungen zur Erfassung in einer Anzahl von Gruppen (GA1, GA2, ..., GAn) wenigstens gleich einer Anzahl n von Einheiten zur Konzentration, wobei jede von ihnen eine bestimmte Anzahl p von Einrichtungen zur Erfassung umfaßt;
- die Zuweisung einer festgelegten Anzahl j von besonderen Frequenzen (fil, ..., fij) zur Funkübertragung an jede Gruppe (Gi), wobei diese Anzahl j kleiner ist als die Anzahl p von Einrichtungen jeder Gruppe und für jede Gruppe definiert ist, wobei die Einrichtungen zur Erfassung einer gleichen Gruppe (Gi) und die verbundene Einheit (Ci) zur Konzentration jeweils mit Einrichtungen zur Funkübertragung auf wenigstens einer der j besonderen Frequenzen versehen sind;
- die Unterteilung von jeder Gruppe (Gi) in wenigstens j Untergruppen von Einrichtungen zur Erfassung, die eine gleiche Übertragungsfrequenz und diese für die sämtlichen Gruppen von Einrichtungen zur Erfassung verwenden sollen, und die Zuweisung von verschiedenen Ordnungsnummern an die verschiedenen Einrichtungen zur Erfassung einer gleichen Untergruppe;
- das Senden eines einzigen Befehls zur Übertragung von der zentralen Station (1) an die sämtlichen Einheiten zur Konzentration und die sämtlichen Einrichtungen zur Erfassung; und
- die Übertragung von Signalen aufeinanderfolgend durch die sämtlichen Einrichtungen zur Erfassung einer gleichen Untergruppe im Verlaufe von Sendefenstern, die in der Zeit in bezug aufeinander verschoben sind, wobei jede Einrichtung zur Erfassung geeignet ist, ihr Sendefenster um ein Zeitintervall, das von ihrer Ordnungsnummer in der Untergruppe, welcher sie ange hört, abhängt, zu verzögern und die Übertragungen von den sämtlichen Untergruppen irgendeiner der verschiedenen Gruppen im wesentlichen zu gleicher Zeit vorgenommen werden.

2. Verfahren nach Anspruch 1, dadurch gekennzeichnet, daß jede der Einrichtungen zur Erfassung mit Einrichtungen zur Übertragung über mehrere verschiedene Frequenzen versehen sind, wobei es das Senden eines vorhergehenden Befehls an die sämtlichen Einrichtungen einer gleichen Gruppe von Steuersignalen umfaßt, welche die Kommutation von deren Sendefrequenz auf eine bestimmte Frequenz gestattet, derart, um sie einer bestimmten Untergruppe zuzuweisen.

3. Verfahren nach Anspruch 1 oder 2, dadurch gekennzeichnet, daß es weiterhin das Senden eines vorhergehenden Befehls umfaßt, der die Zuweisung von verschiedenen Ordnungsnummern an die sämtlichen Einrichtungen zur Erfassung jeder der Untergruppen gestattet.

4. Verfahren nach einem der vorhergehenden Ansprüche, dadurch gekennzeichnet, daß wenigstens ein Teil der Einheiten zur Konzentration mit Einrichtungen zur Kommunikation über einen Funkweg mit der zentralen Station (1) auf einer für jede der Einheiten verschiedenen Frequenz (F1-Fn) versehen ist, wobei die Signale, die zu gleicher Zeit von den Einrichtungen zur Erfassung der verschiedenen Untergruppen zu der zentralen Station empfangen werden, aufeinanderfolgend übertragen werden, indem die verschiedene Frequenz verwendet wird.

5. Verfahren nach einem der vorhergenden Ansprüche, dadurch gekennzeichnet, daß wenigstens ein Teil der Einheiten zur Konzentration mit der zentralen Station über wenigstens einen materiellen Weg (28) zur Übertragung verbunden wird.

6. System zur Übertragung für die Durchführung des Verfahrens nach einem der vorhergehenden Ansprüche, welches die Übertragung zwischen einer zentralen Station (1) zur Steuerung und zur Aufzeichnung, die mit einer Einrichtung zur Steuerung und einer Einrichtung zur Aufzeichnung versehen ist, und einer Vielzahl von Einrichtungen (BA) zur Erfassung von seismischen Daten, die in einer Erfassungszone verteilt sind und Einrichtungen (13, 14) zur Übertragung über einen Funkweg, Einrichtungen (2) zur Digitalisierung und zur Speicherung von Daten, die den Signalen entsprechen, welche durch die Aufnehmer empfangen sind und von Diskontinuitäten einer geologischen Formation in Antwort auf in den Untergrund durch eine seismische Quelle übertragene Erschütterungen stammen, umfassen, wobei das System zur Übertragung dadurch gekennzeichnet ist, daß:
- es eine bestimmte Anzahl n von Einheiten (Cl, C2, ..., Cn) zur Konzentration umfaßt, die mit Einrichtungen (F28) zur Kommunikation mit der zentralen Station (1) zur Steuerung und zur Aufzeichnung und mit einer Gesamtheit (24-27) zum Senden und zum Empfang über Funk versehen ist, um gleichzeitig und entsprechend mehreren verschiedenen Frequenzen mit jeweils mit einer Gruppe von Einrichtungen zur Erfassung zu kommunizieren;
- jede Einrichtung zur Erfassung einer gleichen Gruppe Einrichtungen (M) zur Speicherung für eine Ordnungsnummer, die ihren Rang in einer Untergruppe von Einrichtungen markiert, Einrichtungen zum Senden und zum Empfang, die geeignet sind, entsprechend wenigstens einer bestimmten Übertragungsfrequenz zu arbeiten, Einrichtungen (15) zur Decodierung von Befehlen, die durch die Station zur Steuerung und zur Aufzeichnung gesendet sind, Einrichtungen (6, 7), um eine Zeitskala zu erzeugen, welche im wesentlichen die gleiche für die sämtlichen Einrichtungen zur Erfassung der Gesamtheit ist, und eine Gesamtheit (16) zur Verarbeitung, die die Begrenzung eines Sendefensters (T) und dessen Verschiebung in der Zeit eines Intervalles, welches von der der Einrichtung zur Erfassung zugewiesenen Ordnungsnummer abhängt, gestattet, umfaßt.

7. System zur Übertragung nach Anspruch 6, dadurch gekennzeichnet, daß wenigstens ein Teil der Einrichtungen zur Erfassung Einrichtungen zur Übertragung von Daten auf einem materiellen Weg zur Übertragung umfassen.

8. System zur Übertragung nach Anspruch 6 oder 7, dadurch gekennzeichnet, daß wenigstens ein Teil der Einheiten zur Konzentration Einrichtungen zur Übertragung von Daten, die über einen materiellen Weg zur Übertragung empfangen werden, umfassen.

9. System zur Übertragung nach einem der Ansprüche 6 bis 8, dadurch gekennzeichnet, daß wenigstens ein Teil der Einrichtungen zur Erfassung Einrichtungen zum Senden und zum Empfang, die über irgendeine der Frequenzen (f1, f2, ..., fq) zur Übertragung, welche einer Gruppe zugewiesen sind, unterschiedslos kommutiert werden können, und Einrichtungen (8) zur Kommutation, welche durch die Einheiten (16) zur Verarbeitung betätigt sind, um die Übertragungsfrequenz auszuwählen, umfassen.

10. System zur Übertragung nach Anspruch 9, dadurch gekennzeichnet, daß die Gesamtheit (16) zur Verarbeitung eine Einheit (17) zur Berechnung, eine Einheit (18) zur Speicherung und ein Schnittstellenelement (9) für die Anwendung der jeder Einrichtung zur Erfassung zugewiesenen Ordnungszahl durch den Operateur umfaßt.

11. System zur Übertragung nach Anspruch 9, dadurch gekennzeichnet, daß die Funkeinrichtungen zum Senden und zum Empfang, die mit jeder Einrichtung zur Erfassung verbunden sind, einen Oszillator (4), der durch eine elektrische Spannung und einen geschlossenen Schaltkreis betätigt ist, welcher einen Frequenzsynthesizer (6) mit Vorteiler, der einen von den Einrichtungen (8) zur Kommutation abhängenden Teilungsfaktor an eine Bezugsfrequenz anlegt, umfaßt, und eine Einheit (14) zum Empfang, die mit einer Einheit (16) zur Verarbeitung entsprechend (14) verbunden ist, und um die Einrichtungen (8) zur Kommutation zu betätigen, umfassen.

12. System zur übertragung nach Anspruch 6, dadurch gekennzeichnet, daß der Oszillator (4) einen Eingang zur Modulation für ein Signal umfaßt, das aus einer Kette stammt, welche eine Gesamtheit (2) zur Erfassung von seismischen Signalen, ein Element (COD) zur Codierung und Einrichtungen (9) zur Verstärkung umfaßt.

13. System zur Übertragung nach einem der hauptsächlichen Ansprüche, dadurch gekennzeichnet, daß jede Einheit (C) zur Konzentration Einrichtungen (201-20q) zum Empfang, um über mehrere Funkwege gleichzeitig empfangene Signale zu trennen, Einrichtungen (221-22q) zur Speicherung von entsprechend jedem der Wege empfangenen Signalen, Einrichtungen (23), um das sequentielle Einlesen der verschiedenen Einrichtungen zur Speicherung zu steuern, und Einrichtungen (24-27) zur Übertragung von aus den Einrichtungen zur Speicherung gewonnenen Signalen an die zentrale Station umfaßt.

## Claims

1. Method of transmitting to a central control and recording station (1), via a given number n of concentration units (C1, C2, ..., Cn), digitised data stored in memory in a plurality of seismic data acquisition devices (BA) distributed in an acquisition zone, these data corresponding to the signals received by sensors and caused by discontinuities in a geological formation in response to vibrations transmitted into the subsoil by a seismic source, characterised in that it consists in:
- dividing at least a part of the acquisition devices into a number of groups (GA1, GA2, ..., GAn) at least equal to the number n of concentration units, each of them having a certain number p of acquisition devices;
- assigning to each group Gi a set number j of specific hertzian transmission frequencies (fi1, ..., fij), this number j being less than the number p of devices in each group and defined for each group, the acquisition devices of a same group (Gi) and the associated concentration unit (Ci) each being provided with means for hertzian transmission on at least one of the said specific j frequencies;
- sub-dividing each group (Gi) into at most j sub-groups of acquisition devices that will use a same transmission frequency and doing so for all the groups of acquisition devices and assigning different serial numbers to the different acquisition devices of a same sub-group;
- sending from the central station (1) a single transmission command to all the concentration units and all the acquisition devices; and
- the transmission of signals in succession by all the acquisition units of a same sub-group during transmission windows shifted in time from one another, each acquisition device being programmed to delay its transmission window by a time interval dependent on its serial number within the sub-group to which it belongs, the transmissions from all the sub-groups of any one of the different groups being performed essentially at the same time.

2. Method as claimed in claim 1, characterised in that where each of the acquisition devices is provided with means for transmitting on several different frequencies, it consists in sending beforehand to all the devices of a same group a command containing command signals allowing their transmission frequency to be switched to a given frequency so as to assign them to a given sub-group.

3. Method as claimed in claim 1 or 2, characterised in that in addition, it consists in sending beforehand a command assigning different serial numbers to all the acquisition devices of each of the sub-groups.

4. Method as claimed in one of the preceding claims, characterised in that at least a part of the concentration units is provided with means for communicating with the central station (1) by hertzian channel at a different frequency (F1-Fn) for each of the said units, the signals received from the acquisition devices of the different sub-groups at the same time being transmitted to the central station in succession using the said different frequency.

5. Method as claimed in one of the preceding claims, characterised in that at least a part of the said concentration units is linked to the central station by at least one physical transmission link (28).

6. Transmission system for implementing the method as claimed in one of the preceding claims, allowing the transmission between a central control and recording station (1) equipped with a control and recording means and a plurality of seismic data acquisition devices (BA) distributed over an acquisition zone and having means (13, 14) for transmission by hertzian channel, means (2) for digitising and storing in memory data corresponding to the signals received by sensors and coming from discontinuities in a geological formation in response to vibrations transmitted into the subsoil by a seismic source, the transmission system being characterised in that:
- it has a given number n of concentration units (C1, C2, ..., Cn) provided with means for communicating (F28) with the said central control and recording station (1) and a unit (24-27) for transmitting and receiving by radio in . order to communicate simultaneously and on several different frequencies each with a group of acquisition devices;
- each acquisition device of a same group has memory means M for storing a serial number indicating its rank within a sub-group of devices, transmitting and receiving means tuned to operate on at least one given transmission frequency, means (15) for decoding commands issued by the control and recording station, means (6, 7) for generating a time scale that is substantially the same for all the acquisition devices in the array, and a processing unit (16) enabling a transmission window (T) to be defined as well as its shift in time by an interval that is dependent on the serial number assigned to the said acquisition device.

7. Transmission system as claimed in claim 6, characterised in that at least a proportion of the acquisition devices has means for transmitting data on a physical transmission channel.

8. Transmission system as claimed in claim 6 or 7, characterised in that at least a proportion of the concentration units has means for transmitting data received on a physical transmission channel.

9. Transmission system as claimed in one of claims 6 to 8, characterised in that at least a proportion of the acquisition devices has transmission and reception means that can be switched as required to any one of the transmission frequencies (f1, f2 ... fq) assigned to a group and switching means (8) controlled by processing units (16) which select the transmission frequency.

10. Transmission system as claimed in claim 9, characterised in that the processing unit (16) has a calculating unit (17), a memory unit (18) and an interface element (9) enabling the operator to apply the serial number assigned to each acquisition unit.

11. Transmission system as claimed in claim 9, characterised in that the radio transmission and reception means associated with each acquisition device have an oscillator (4) controlled by an electric voltage and a looped circuit having a pre-divider frequency synthesizer (6) applying to a reference frequency a division factor dependent on the said switching means (8) and a reception unit (14) connected to the corresponding (14) processing unit (16) for operating the switching means (8).

12. Transmission system as claimed in claim 6, characterised in that the said oscillator (4) has a modulation input for a signal issued by a system consisting of a seismic signal acquisition device (2), a coding element (COD) and amplification means (9).

13. Transmission system as claimed in one of the main claims, characterised in that each concentration unit (C) has reception means (201-20q) for separating the signals received simultaneously by several hertzian channels, means for storing in memory (221-22q) the signals received on each of the said channels, means (23) for controlling the sequential reading of the different memory means and means for transmitting to the central station (24-27) the signals extracted from the memory means.
